# EUROPÄISCHE PATENTSCHRIFT

(11) **EP 2 149 028 B1**
(45) Veröffentlichungstag und Bekanntmachung des Hinweises auf die Patenterteilung: **26.09.2012**
(21) Anmeldenummer: 08758152.6
(22) Anmeldetag: 21.05.2008
(51) Int. Cl.: G01B 11/02, G01J 3/12, G01J 3/02, G02B 21/00, G01B 7/02

(54) **VERFAHREN ZUR KOMPENSATION VON TEMPERATURBEDINGTEN MESSFEHLERN IN EINEM KONFOKAL CHROMATISCH MESSENDEN ABSTANDSSENSOR**
METHOD FOR COMPENSATING FOR TEMPERATURE RELATED MEASUREMENT ERRORS IN A CONFOCAL CHROMATIC MEASURING DISTANCE SENSOR
PROCÉDÉ DE COMPENSATION D'ERREURS DE MESURE DUES À LA TEMPÉRATURE DANS UN CAPTEUR DE DISTANCE À MESURE CHROMATIQUE CONFOCALE

(30) Priorität: 21.05.2007 DE 102007023794; 15.05.2008 DE 102008023665
(43) Veröffentlichungstag der Anmeldung: 03.02.2010
(73) Patentinhaber: Micro-Epsilon Messtechnik GmbH & Co. KG, 94496 Ortenburg (DE)
(72) Erfinder: HOENICKA, Reinhold, 94496 Ortenburg (DE); FINK, Alexander, 94032 Passau (DE)
(74) Vertreter: Ullrich & Naumann
(86) Internationale Anmeldenummer: PCT/DE2008/000912
(87) Internationale Veröffentlichungsnummer: WO 2008/141640

(56) Entgegenhaltungen:
- WO-A-96/41123
- WO-A-2005/121700
- WO-A-2006/122519
- US-B1- 6 917 421

## Beschreibung

Die Erfindung betrifft ein Verfahren zur Kompensation von temperaturbedingten Messfehlern einer optischen Anordnung, die mindestens eine Linse aufweist, wobei die Anordnung (1, 1') ein konfokal chromatisch messender Abstandssensor ist. Ferner betrifft die Erfindung eine entsprechende optische Anordnung.

In vielen industriellen Bereichen, wie beispielsweise der Halbleiter- oder der Automobilindustrie, sind optische Anordnungen weit verbreitet. Sie werden beispielsweise für berührungslose Positionsbestimmungen oder Abstandsmessungen verwendet und müssen dort in Temperaturbereichen von -30 °C bis +70 °C und darüber hinaus zuverlässig und präzise arbeiten. Derartige Temperaturänderungen führen jedoch aufgrund des materialabhängigen Temperatur-Ausdehnungskoeffizienten zu Dimensionsänderungen der optischen und mechanischen Komponenten, was die Messgenauigkeit nicht unerheblich vermindert. Eine Aluminiumhalterung mit einer Länge von 10 mm dehnt sich beispielsweise bei einer Temperaturänderung von -20 auf +40 °C um 14 µm aus.

Konfokal chromatisch messende Abstandssensoren sind beispielsweise in der WO 2006/122519 A1, der WO 2005/121700 A1, der US 6,917,421 B1 oder der WO 96/41123 A1 offenbart. Diesen Druckschriften sind jedoch keine Mittel zur Kompensation von Temperatureffekten entnehmbar. Bei anderen Sensoranordnungen wurden hierfür verschiedene Vorrichtungen vorgeschlagen.

Die US 4,919,519 offenbart ein System, bei dem eine Linsenanordnung in Abhängigkeit von der Temperatur in ihrer Position verschoben wird. Dazu befindet sich in einer Kammer eine Flüssigkeit, die bei temperaturbedingtem Ausdehnen die Linsenanordnung längs der optischen Achse bewegt. Dadurch wird die optische Anordnung gezielt in Abhängigkeit der Temperatur beeinflusst.

Eine andere, ebenfalls auf Ausdehnung einer Flüssigkeit beruhende Anordnung ist in der DE 10 2006 046 416 A1 gezeigt. Dort wird ein relativ zu einem Gehäuse verfahrbares optisches Element über eine Kolben-Zylinder-Einheit in Abhängigkeit der Temperatur verschoben. Dabei befindet sich in der Kolben-Zylinder-Einheit eine Flüssigkeit mit definiertem Temperaturkoeffizienten. Durch geeignete Abstimmung der einzelnen Elemente der Anordnung können thermische Einflüsse weitestgehend kompensiert werden.

Ein anderer Ansatz ist in der DE 102 611 973 A1 gezeigt. Dort ist in einer tubusförmigen Halterung einer Linse eine Zwischenhalterung eingesetzt. Die Halterung und die Zwischenhalterung sind in ihrer Dimensionierungen und in den Temperaturkoeffizienten der Materialien derart gewählt, dass sich bei einer Temperaturänderung die Ausdehnungen der Halterung und der Zwischenhalterung gegenseitig kompensieren und die Linse in konstanter Position gehalten wird.

Bei den in den Druckschriften JP 58 00 7109 A und WO 2007/023052 A1 offenbarten Vorrichtungen sind zwischen einem Delektorelement und dem die Anordnung umschließenden Gehäuse Korrekturmaterialien mit definiertem Temperatur-Ausdehnungskoeffizienten angeordnet, die bei Temperaturänderungen die Position des Detektors definiert nachführen. Dadurch kann bei geeigneter Dimensionierung der Abstand zwischen Optik und Detektor konstant gehalten werden.

Problematisch bei den aus dem Stand der Technik bekannten Vorrichtungen ist, dass die optischen Anordnungen und deren Bestandteile in erheblichem Maße aufeinander abgestimmt sein müssen. Sollen auch nur einzelne Bestandteile ersetzt werden oder kommt es in Folge von Produktionstoleranzen zu Schwankungen der Temperaturkoeffizienten, erfolgt lediglich eine unzureichende Kompensation der temperaturbedingten Fehler. Nicht zuletzt dadurch sind derartige Vorrichtungen mit erheblichen Kosten verbunden und weisen eine entsprechende Störanfälligkeit auf. Des Weiteren muss bei der Konstruktion der Vorrichtungen oft auf spezielle und daher teuere Materialien zurückgegriffen werden, um die einzelnen Komponenten geeignet auf einander abstimmen zu können. Ferner verursachen die zusätzlichen Komponenten zur Kompensation der Temperaturänderung eine Vergrößerung der Bauformen der Vorrichtungen. Darüber hinaus sind diese Vorrichtungen nicht oder nur sehr bedingt bei optischen Anordnungen einsetzbar, die Gradientindex-Linsen aufweisen. Gradientindex-Linsen weisen bei Temperaturänderungen neben den geometrischer Dimensionsänderung eine Änderung des Brechungsindexes der Linse auf, die zudem nicht linear ist.

Der vorliegenden Erfindung liegt daher die Aufgabe zugrunde, ein Verfahren und eine optische Anordnung der eingangs genannten Art derart auszugestalten und weiterzubilden, dass eine kostengünstige und zuverlässige Kompensation von temperaturbedingten Messfehlern ohne erheblichem konstruktivern Mehraufwand erreicht werden kann.

Erfingdungsgemäß wird die voranstehende Aufgabe durch die Merkmale des Patentanspruches 1 gelöst. Danach Ist das In Rede stehende Verfahren derart weitergebildet, dass die optische Anordnung von einem Mehrfarbenlichtstrahl passiert wird, der infolge von chromatischer Abberation der Linse in unterschiedlich weit von der Linse entfernt liegende Punkte fokussiert wird, dass ein Teil des Spektrums des Lichtstrahls innerhalb der optischen Anordnung zumindest teilweise reflektiert und einer Detektionseinrichtung zugeleitet wird, durch die eine Bestimmung eines Spektrums durchgeführt wird, dass aus dem durch die Detektionseinrichtung bestimmten Spektrum auf die Temperatur der Anordnung geschlossen wird und dass mittels der derart bestimmten Temperatur eine Kompensation von temperaturbedingten Messfehlern durchgeführt wird.

Bezüglich der optischen Anordnung ist die voranstehende Aufgabe durch die Merkmale der Patentanspruchs 6 gelöst. Danach ist die in Rede stehende optische Anordnung dadurch gekennzeichnet, dass die Linse infolge von chromatischer Abberation einen in die Anordnung eingekoppelten Mehrfarbenlichtstrahl auf unterschiedlich weit von der Linse entfernt liegenden Punkte fokussiert, dass innerhalb der optischen Anordnung ein optische Mittel derart angeordnet ist, dass an einer Grenzfläche des optischen Mittels ein Teil des Spektrums des Mehrfarbenlichtstrahls zumindest teilweise reflektiert wird, wobei der reflektierte Teil des Spektrums einer Detektionseinrichtung zur Bestimmung des Spektrums zuleitbar ist, dass eine Auswerteelektronik mit der Detektionseinrichtung verbunden ist, die aus dem durch die Detektionseinrichtung bestimmten Spektrum die Temperatur der Anordnung bestimmt und eine Kompensation von temperaturbedingten Messfehlern durchführt.

In erfindungsgemäßer Weise ist zunächst erkannt worden, dass auf aufwendige konstruktive Maßnahmen und auf eine Abstimmung von Geometrien und Temperaturausdehnungskoeffizienten weitestgehend verzichtet werden kann. Dies kann erfindungsgemäß dadurch vermieden werden, dass innerhalb der optischen Anordnung eine temperaturabhängige Kenngröße bestimmt wird, die zur Kompensation von temperaturbedingten Messfehlern herangezogen werden kann.

Dazu wird ein Mehrfarbenlichtstrahl in die optische Anordnung eingekoppelt, der durch die mindestens eine Linse der optischen Anordnung in Folge von chromatischer Abberation in unterschiedlich weit von der Linse entfernt liegende Punkte fokussiert wird. Chromatische Abberation beschreibt eine Eigenschaft von Abbildungsoptiken, wonach ein Mehrfarbenlichtstrahl in Abhängigkeit von der Wellenlänge unterschiedlich stark durch die Linse gebrochen wird. Dadurch entsteht eine Reihe von vor der Linse, auf deren optischen Achse liegenden Brennpunkten. Diese Auftrennung in mehrere Brennpunkte kann zu Abstandsmessungen herangezogen werden. Eine hierfür geeignete Vorrichtung ist in der WO 2006/122519 A1 offenbart. Bei dieser Vorrichtung wird ein durch chromatische Abberation einer Linse spektral aufgetrennter Mehrfarbenlichtstrahl auf ein Messobjekt gelenkt und von diesem reflektiert. Der reflektierte Lichtstrahl gelangt über einen Lichtwellenleiter und eine Lochblende zu einem Spektrometer, das eine Bestimmung eines Spektrums durchführt. Durch besondere Ausgestaltung der Vorrichtung erreichen im Wesentlichen die spektralen Anteile des reflektierten Mehrfarbenlichtstrahls das Spektrometer, die möglichst genau auf die Oberfläche des Messobjekts fokussiert waren. Daraus kann ein Abstand zum Messobjekt bestimmt werden.

Erfindungsgemäß kann dieser Effekt nicht nur zur Abstandsmessung herangezogen werden. Vielmehr lässt sich chromatische Abberation auch zur Bestimmung einer Kenngröße nutzen, die ein Maß für temperaturbedingte Messfehler der optischen Anordnung darstellt. Dazu werden Reflexionen innerhalb der optischen Anordnung genutzt, die üblicherweise ohnehin an Grenzflächen von optischen Mitteln erzeugt werden. Auf diese Weise kann ein Teil des Spektrums des Mehrfarbenlichtstrahls innerhalb der optischen Anordnung reflektiert und einer Detektionseinrichtung zugeleitet werden. In der Detektionseinrichtung wird das Spektrum des reflektierten Lichtstrahls bestimmt, welches sich in Abhängigkeit der Temperatur der Anordnung verschiebt. Somit kann in ungekehrter Richtung aus einem durch die Detektionseinrichtung bestimmten Spektrum auf die Temperatur der Anordnung geschlossen werden. Mit diesen Informationen lässt sich wiederum eine Kompensation temperaturbedingter Messfehler durchführen.

Durch die besondere Ausgestaltung der Anordnung ist kein separater Temperatursensor notwendig, da lediglich sensorinterne Messungen, also Messungen innerhalb der optischen Anordnung, durchgeführt werden. Dabei wird ein sonst als unerwünscht aufgefasster parasitärer Effekt einer optischen Anordnung genutzt, ohne dabei den eigentlichen Betrieb der optischen Anordnung zu beeinflussen.

Für eine Zuordnung eines durch die Detektionseinrichtung bestimmten Spektrums zu einer Temperatur der Anordnung können verschiedene Verfahren genutzt werden. Als eine relativ Ressourcen sparende Möglichkeit könnten Wertetabellen (lookup-table) eingesetzt werden. Dazu wird eine Zuordnung zwischen einem spektralen Anteil und der jeweils zugehörigen Temperatur der Anordnung in der Wertetabelle abgelegt. Bei Zuordnung einer jeweiligen Temperatur der Anordnung könnten aus dem durch die Detektionseinrichtung bestimmten Spektrum die spektralen Anteile, die im Allgemeinen lediglich aus spektralen Linien oder einem schmalen Spektralbereich besteht, extrahiert werden. Mit dem Ergebnis könnte schließlich aus der Wertetabelle die dazugehörige Temperatur ausgelesen werden.

Alternativ könnte ein funktionaler Zusammenhang zwischen Spektrum und Temperatur der Anordnung hinterlegt sein. Diese Zuordnung benötigt wesentlich weniger Speicherplatz und ist im Normalfall präziser, da keine Beschränkung hinsichtlich der Anzahl der Stützwerte gegeben ist. Allerdings ist für die Bestimmung der Temperatur aus dem funktionalen Zusammenhang eine höhere Rechenleistung notwendig, was in vielen Anwendungen jedoch unproblematisch sein dürfte. Die Bestimmung der Temperatur würde entsprechend dem Vorgehen bei Nutzung einer Wertetabelle erfolgen. Nach Extraktion der spektralen Anteile würden diese in den funktionalen Zusammenhang eingesetzt werden und entsprechend berechnet werden. Dabei kann der funktionale Zusammenhang durch einen Mikrorechner oder dergleichen gelöst werden.

Nach Bestimmen der Temperatur der Anordnung wird diese zur Kompensation von temperaturbedingten Messfehlern genutzt. Vorzugsweise geschieht dies mittels eines Korrekturgliedes, das eine Abhängigkeit von der Temperatur repräsentiert und zu der durch die optische Anordnung bestimmten Messgröße hinzuaddiert wird. Dabei wird die Messgröße in Abhängigkeit des Vorzeichens des Korrekturglieds vergrößert oder verringert, wodurch eine Kompensation der Messfehler der optischen Anordnung erfolgt. Eine Kompensation könnte jedoch auch durch Multiplikation mit einem weiteren Korrekturglied oder durch Verwendung einer weiteren Wertetabelle durchgeführt werden. Mittels der weiteren Wertetabelle ließen sich einem Messwert in Abhängigkeit der Temperatur Referenzwerte zuordnen, die aus Kalibrierungsmessungen gewonnen wurden. Alternativ könnte die Kompensation auch durch Eingriff In die optische Anordnung erlolgten. So wäre es prinzipiell denkbar, mit Aktuatoren Linsen, Detektoren oder andere optische Mittel zu verschieben oder Eigenschaft von optischen Mitteln zu beeinflussen. Letztendlich ist eine Vielzahl von aus dem Stand der Technik bekannten Verfahren zur Kompensation temperaturbedingter Messfehler anwendbar.

Zur Bestimmung der Wertetabellen, des funktionalen Zusammenhangs oder der Korrekturglieder könnten Kalibrierungsmessungen durchgeführt werden. Dazu könnte die optische Anordnung In einer Messsituation aufgebaut werden und in einem Klimaofen auf definierte Temperaturen gebracht werden. Dabei könnte der gesamte Temperaturbereich, in dem die optische Anordnung eingesetzt werden soll, durchfahren werden. Zusätzlich könnte der gesamte Messbereich der optischen Anordnung variiert werden, so dass in Abhängigkeit der Temperatur korrespondierende reale Größen bekannt sind. Aus diesen Kalibrierungsmessungen ergeben sich die zu einer Temperatur und den jeweiligen internen Reflexionen gehörenden Spektrallinien. Zusätzlich lassen sich Informationen über die zu einer Temperatur gehörenden Messfehler gewinnen und daraus entsprechende Korrekturglieder berechnen. Diese Werte können schließlich zum Erstellen einer Wertetabelle oder zum Auffinden eines funktionalen Zusammenhangs genutzt werden.

Vorteilhafter Weise könnte zusätzlich zur Kompensation von temperaturbedingten Messfehlern auch eine Kompensation weiterer Fehler vorgenommen werden. So treten bei optischen Anordnungen, die Gradientindex-Linsen aufweisen, zusätzliche Fehler auf, die insbesondere durch Alterungseffekte der Linsen verursacht werden. Diese Fehler sind im Allgemeinen zwar relativ gering, reduzieren aber die Messgenauigkeit der optischen Anordnung. Durch die gleichzeitige Verwendung der optischen Anordnung zur Messung einer Messgröße und zur Temperaturmessung können diese Fehler jedoch leicht kompensiert werden. Durch das Driftverhalten werden nämlich neben den Messgrößen der optischen Anordnung auch die Messwerte der Temperatur beeinflusst. Dadurch wirkt sich eine Drift zusätzlich auf die Messgenauigkeit der Temperatur aus. Vorteilhafter Weise heben sich beide Fehler weitestgehend auf.

In einer ganz besonders bevorzugten Ausführungsform der Erfindung ist die Anordnung ein konfokal chromatisch messender Abstandssensor, wie er in der bereits erwähnten WO 2006/122519 A1 beschrieben ist. Mit dem Sensor lässt sich nicht nur der Abstand zum Messobjekt sondern gleichzeitig auch die Temperatur des Sensors bestimmen. Die Detektionseinrichtung des Sensors kann zum Erreichen beider Ziele genutzt werden. In dem durch die Detektionseinrichtung bestimmten Spektrum werden mindestens zwei Peaks vorhanden sein: ein durch Reflexionen am Messobjekt hervorgerufener Peak und ein durch sensorinterne Reflexionen verursachter wesentlich kleinerer Peak. Letzterer wird üblicherweise durch geschickte Dimensionierung des Sensors derart gelegt, dass er sich am unteren Ende (im roten Bereich) oder am oberen Ende (im blauen Bereich) des Spektrums befindet. Beide Peaks werden durch temperaturabhängige Fehler beeinflusst und enthalten sowohl Abstands- als auch Temperaturinformationen. Die Abstandsinformationen rühren daher, dass der Sensor selbst einer Längonausdehnung unterworfen ist. Da allerdings die Geometrie des Sensors und somit die sensorinternen Abstände bekannt sind, können temperaturbedingten Fehler des von der sensorinternen Reflexion verursachten Peaks leicht bestimmt werden. Daraus kann wiederum der Fehler des Abstands bestimmt werden, da die Abstandsinformation den gleichen Fehlereinflüssen unterworten ist. Im Ergebnis spielen die sensorinternen Fehler keine Rolle und werden in der Kompensation insgesamt mit berücksichtigt.

In der optischen Anordnung kommt vorzugsweise als Unse eine Gradlentindex-Linse zum Einsatz. Gradientindex-Linsen besitzen einen relativ beliebigen geometrischen Aufbau und zeichnen sich durch einen Verlauf des Brechungsindexes senkrecht zur Ausbreitungsrichtung des Lichtstrahls aus. Meist sind Gradientindex-Linsen jedoch zylindrisch aufgebaut, wobei die Lichtstrahlen an den Grund- und Deckflächen des Zylinders ein- bzw. austreten. Ein eine Gradientindex-Linse durchlaufender Lichtstrahl beschreibt dadurch innerhalb der Linse einen Teil einer Sinuskurve. Je länger eine Gradientindex-Linse ist, desto größere Teile einer Sinuskurve werden in der Linse beschrieben. Dabei erhöht sich durch Verlängerung der Gradientindex-Linse die chromatische Abberation, wodurch gezielt eine Auftrennung der spektralen Anteile erhöht werden kann. Allerdings nehmen mit länger werdender Gradientindex-Linse zusätzlich die Temperaturfehler zu. Dies kann jedoch in gewissen Grenzen in Kauf genommen werden, da diese Fehler durch das erfindungsgemäße Verfahren und die erfindungsgemäße Vorrichtung auf einfachste Art und weise gemessen und kompensiert werden können.

Vorzugsweise kommt als Mehrfarbenlichtstrahl das Licht einer Weißlichtquelle zum Einsatz. Damit wird die Auswertung der Messergebnisse erheblich vereinfacht. Allerdings könnten prinzipiell auch andere Lichtquellen verwendet werden. Dabei dürfte sich jedoch als sinnvoll erweisen, wenn im Wesentlichen kontinuierlich spektrale Anteile in der Lichtquelle enthalten sind. Dadurch ist gewährleistet, dass ein weitgehend kontinulerlicher Messbereich abgedeckt werden kann.

Die zur Bestimmung der Temperatur der Anordnung genutzte Reflexion innerhalb der optischen Anordnung erfolgt an einem optischen Mittel. Dieses optische Mittel kann auf verschiedenste Art und Weise gebildet sein. So kann beispielsweise eine Vorsatzlinse, die nach der die chromatische Abberation hervorrufenden Linse angeordnete ist, das optische Mittel bilden. Diese Vorsatzlinse könnte mittels einer Halterung gehalten werden, die durch geeignete Materialwahl (beispielsweise Keramik oder Invar) einen sehr geringen Temperaturausdehnungskoeffizienten aufweist. Dadurch würde sich die Position der Vorsatzlinse bei Temperaturänderungen nur in sehr geringem Maße ändern.

Allerdings könnte auch die Linse selbst, die die chromatische Abberation hervorruft, das optische Mittel bilden. Bei Verwendung einer Gradientindex-Linse könnte die Grenzfläche beispielsweise durch die dem Messobjekt zugewandte Stirnseite der Linse gebildet sein.

In jedem Fall erfolgt an einer Grenzfläche des optischen Mittels eine Reflexion, bei der ein Teil des Spektrums des Mehrfarbenlichtstrahls reflektiert wird. Dabei wird im Normalfall nicht die gesamte Intensität eines spektralen Antells an der Grenzfläche reflektiert. Teilweise werden diese auch durch die Grenzfläche hindurchtreten, so dass der Teil des Spektrums im Allgemeinen lediglich teilweise reflektiert werden wird.

Sollte die Intensität des reflektierten Lichts nicht ausreichen, könnte zusätzlich die Grenzfläche des optischen Mittels mit einer geeigneten Schicht beschichtet sein. Damit ließe sich gezielt die Intensität des reflektierten Lichtstrahls erhöhen. Da meist bekannt sein dürfte, welche spektralen Anteile die reflektierten Lichtstrahlen aufweisen, könnte die Beschichtung entsprechend auf diese Wellenlängen abgestimmt sein.

Vorteilhafterweise ist die Grenzfläche des optischen Mittels, die zur Bestimmung der Temperatur in der optischen Anordnung genutzt wird, in dem Bereich angeordnet, in dem der Mehrfarbenlichtstrahl spektral aufgetrennt ist, d. h. nach der die chromatische Abberation hervorrufenden Linse. Dabei gibt es jedoch verschiedene Punkte, an denen die Grenzfläche angeordnet sein kann. So kann zum einen der Messbereich der Anordnung derartig gelegt sein, dass ein Teil des Messbereichs innerhalb der optischen Anordnung liegt. Dadurch kann zwar ein Teil des Messbereichs nicht zur eigentlichen Messung genutzt werden, allerdings kann dieser nicht nutzbare Bereich derart klein gewählt werden, dass die temperaturbedingten Änderungen gerade noch abgebildet werden. Damit reduziert sich der nicht nutzbare Bereich auf ein Minimum. Im Gegenzug bietet die Anordnung jedoch eine Temperaturmessung ohne zusätzlichen sensorischen Aufwand.

Alternativ könnte sich die Grenzfläche auch in einem Zwischenfokusbereich der Anordnung befinden. So kann eine erst Linsen der optischen Anordnung derart angeordnet sein, dass sie die chromatische Abberation hervorruft und den einfallenden Mehrtarbenlichtstrahl auf eine Reihe von Brennpunkten fokussiert. Eine zweite, danach angeordnete Linse könnte zur Formung des abgestrahlten Lichts genutzt werden. Wenn die zweite Linse hinter den Brennpunktbereich der ersten Linse gelegt wird, kann in diesem Zwischenfokusbereich eine Grenzfläche angebracht werden, die eine zur Temperaturbestimmung genutzte Reflexion hervorruft. Dadurch verliert zwar das bei der Detektionseinrichtung detektierte Spektrum seine Eineindeutigkeit, da sich der zur Temperaturbestimmung genutzte Teil des Spektrums nicht mehr eindeutig von dem des zur Messung genutzten Teils unterscheidet. Allerdings ist die Intensität des durch anordnungsinteme Reflexion hervorgerufenen Lichtstrahls wesentlich geringer als die des durch externe Reflexion hervorgerufenen Lichtstrahls. Daher wird diese mangelnde Eineindeutigkeit relativ einfach zu beheben sein.

Es gibt nun verschiedene Möglichkeiten, die Lehre der vorliegenden Erfindung in vorteilhafter Weise auszugestalten und weiterzubilden. Dazu ist einerseits auf die den Patentansprüchen 1 und 6 jeweils nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung ein konfokal chromatisch messender Sensor mit Vorsatzlinse unter Verwendung einer erfindungsgemäßen Kompensation temperaturbedingter Messfehler,
- Fig. 2: ein Diagramm mit einem exemplarischen, durch den Sensor gemäß Fig. 1 gemessenen Spektrum und
- Fig. 3: in einer schematischen Darstellung den vorderen Teil eines konfokal chromatisch messenden Sensors ohne Vorsatzlinse unter Verwendung einer erfindungsgemäßen Kompensation temperaturbedingter Messfehler mit dazugehörigem Spektrum.

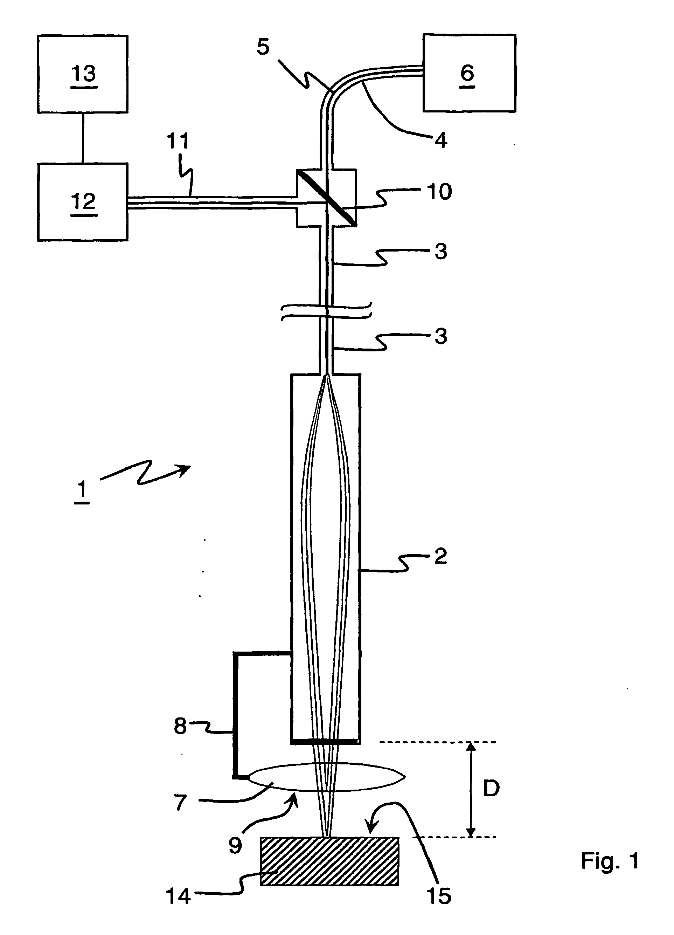

Fig. 1 zeigt eine optische Anordnung 1, die eine Gradientindex-Linse 2 enthält. In die Gradientindex-Linse 2 wird über Lichtwellenleiter 3, 4 ein Mehrfarbenllchtstrahl 5 eingekoppelt, der von einer Weißlichtquelle 6 erzeugt wird. Die Gradientindex-Linse 2 besteht aus einem Quarzglasstab, der mit Metallionen (wie beispielsweise Silberionen) derart dotiert ist, dass ein Brechzahlindexprofil senkrecht zur optischen Achse der Linse entsteht. Innerhalb der Gradientindex-Linse 2 wird der Mehrfarbenlichtstrahl 5 in Abhängigkeit der Wellenlänge der spektralen Anteile unterschiedlich stark abgelenkt, wodurch im Bereich vor der Gradientindex-Linse 2 eine Reihe von Fokuspunkten entsteht, von denen exemplarisch drei in der Fig. eingezeichnet sind. Vor der Gradientindex-Linse ist eine Vorsatzlinse 7 angeordnet, die durch eine Halterung 8 gehalten wird. Die Vorsatzlinse 7 dient als optisches Mittel und stellt eine Grenzfläche 9 zur Verfügung. An der Grenzfläche 9 wird ein Teil des Spektrums des Mehrfarbenlichtstrahls reflektiert, durchläuft die Gradientindex-Linse 2 in umgekehrte Richtung (in Fig. 1 nach oben) und trifft auf einen semipermeablen Spiegel 10, der die innerhalb der optischen Anordnung reflektierten Lichtstrahlen oder die von außen in die optische Anordnung zurückreflektierten Lichtstrahlen über einen Lichtwellenleiter 11 einer Detektionseinrichtung 12 zuleitet. Die Detektionseinrichtung 12 ist durch ein Spektrometer gebildet, das die einfallenden Lichtstrahlen gemäß ihrer Wellenlängen auftrennt und deren jeweilige Intensität mlsst. Der Detektionseinrichtung 12 ist eine Auswerteelektronik 13 zum Auswerten des durch die Detektionseinrichtung bestimmten Spektrums zugeordnet.

Der die Gradientindex-Linse 2 passierende Mehrfarbentichtstrahl 5 wird in weiten Teilen nicht von der Grenzfläche 9 reflektiert, sondern verlässt die optische Anordnung durch die Grenzfläche 9 der Vorsatzlinse 7. Befindet sich ein Messobjekt 14 im Messbereich der optischen Anordnung, wird das von dem Messobjekt 14 reflektierte Licht ebenfalls über die Vorsatzlinse 7, die Gradientindex-Linse 2, den Lichtwellenleiter 3, den semipermeablen Spiegel 10 und den Lichtwellenleiter 11 der Detektionseinrichtung 12 zugeleitet. Dabei werden zwar prinzipiell sämtliche auftreffenden Lichtstrahlen von dem Messobjekt reflektiert, allerdings erfüllen lediglich die spektralen Anteile, die auf die Oberfläche 15 des Messobjekts 14 fokussiert sind, die optischen Anforderungen, um von der Gradientindex-Linse 2 in den Lichwellenleiter 3 eintreten zu können. Dadurch entsteht im Spektrum ein relativ scharfer Peak, dessen Auswertung eine Möglichkeit bietet, den Abstand D des Messobjekts 14 von der optischen Anordnung 1 zu bestimmen.

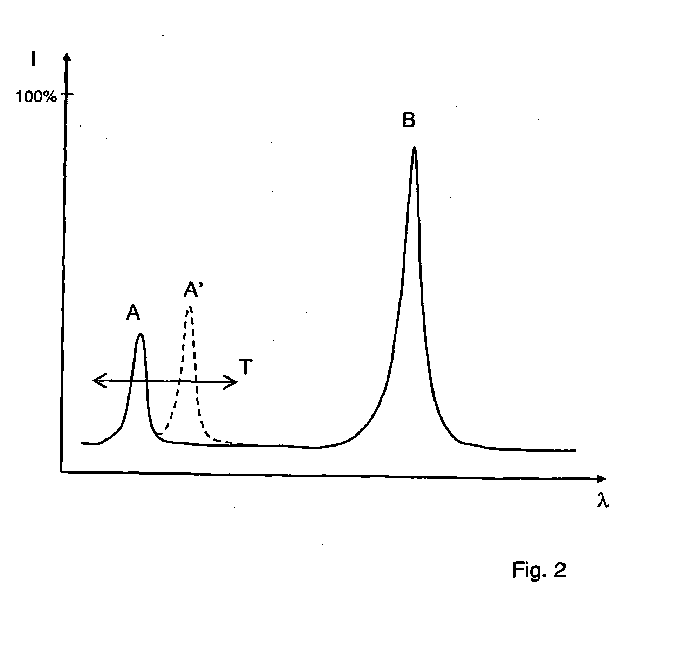

Ein durch die Detektionseinrichtung 12 detektiertes Spektrum ist exemplarisch in Fig. 2 wiedergegeben. Dort ist die Intensität I der spektralen Anteile über der Wellenlänge λ aufgetragen. Im kurzwelligen Bereich ist ein relativ niedriger Peak A zu erkennen, ein höherer Peak B liegt bei einer größeren Wellenlänge. Die Positionen der Peaks ergeben sich durch die besondere Ausgestaltung der Anordnung. Sie könnten sich bei anderer Ausgestaltung der Anordnung auch an der jeweils anderen Position befinden.

Beide Peaks werden durch temperaturabhängigen Fehler beeinflusst und beinhalten sowohl Abstandsinformation als auch Temperaturinformation. Während jedoch der Abstand zum Messobjekt unbekannt ist und daher gemessen werden soll, ändert sich die Position der Vorsatzlinse 7 lediglich in Abhängigkeit der Temperatur. Diese Änderung kann einerseits durch geeignete Wahl des Materials der Halterung 8 (beispielsweise Keramik oder Invar) reduziert werden. Andererseits spielt die dennoch vorhandene Änderung keine Rolle, da dieser Fehler sich insgesamt mit dem erfindungsgemäßen Verfahren mit kompensieren lässt.

Peak A ist daher ein im Wesentlichen von der Temperatur der optischen Anordnung abhängiger Bestandteil, der von dem an der Grenzfläche 9 reflektierten Lichtstrahl resultiert. Die Position des Peaks A im Spektrum entspricht der Position der Grenzfläche innerhalb des Sensors und ändert sich nur mit der Temperatur, wobei eine temperaturabhängige Änderung als gestrichelte Linie angedeutet ist. Der gestrichelt gezeichnete Peak A' entsteht durch Änderung der Temperatur T der optischen Anordnung.

Peak B ist dagegen im Wesentlichen vom Abstand D des Messobjekts 14 von der optischen Anordnung 1 abhängig und ist durch Temperaturänderungen mit Fehlern behaftet. Allerdings können mit den aus Peak A gewinnbaren Informationen, die von der jeweiligen Messsituation weitestgehende unabhängig sind, temperaturbedingte Messfehler korrigiert werden. Dazu werden mittels der Auswerteelektronik 13 die spektralen Antelle des Peaks A extrahiert und unter Verwendung einer Wertetabelle oder eines funktionalen Zusammenhangs einer Temperatur zugeordnet. Basierend auf dieser Temperatur wird ein Korrekturglied bestimmt, das zu einem mit Peak B korrespondierenden Abstand addiert wird. Damit kann ein von der Umgebungstemperatur unabhängiger und fehlerbereinigter Messwert durch die Auswerteelektronik 13 ausgegeben werden. Die Wertetabelle, der funktionale Zusammenhang und das Korrekturglied sind mittels Kalibrierungsmessungen ermittelt worden.

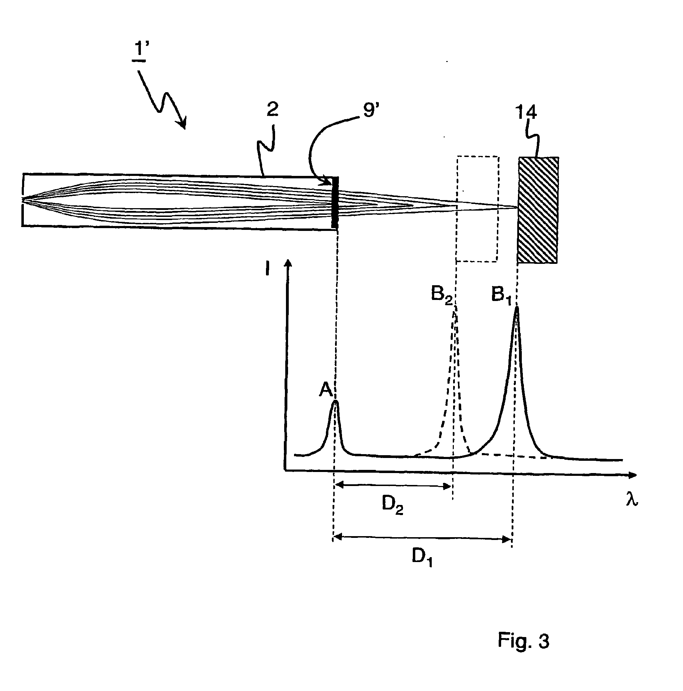

Fig. 3 zeigt den vorderen Tell der optischen Anordnung gemäß Fig. 1, wobei hier keine Vorsatzlinse Verwendung findet. Auf die Darstellung der Lichtquelle 6, der Detektionseinrichtung 12, des Spiegels 10 und der Auswerteelektronik 13 wurde in Fig. 3 der Übersichtlichkeit wegen verzichtet. In die Gradientindex-Linse 2 wird wiederum ein Mehrfarbenlichtstrahl eingekoppelt, der in mehrere vor der Linse 2 liegende Punkte fokussiert wird. Ein Messobjekt 14 reflektiert das von der optischen Anordnung 1' abgegebene Licht und reflektiert es in die Gradientindex-Linse 2 zurück. Die Auswertung erfolgt entsprechend den Ausführungen bezüglich 1. Als Grenzfläche 9' des optischen Mittels dient hier die vordere Stirnfläche der Gradientindex-Linse 2. Das optische Mittel wird demnach durch die Gradientindex-Linse 2. gebildet.

Das durch die Detektionseinrichtung 12 (in Fig. 3 nicht eingezeichnet) detektierte Spektrum ist im unteren Teil der Fig. 3 dargestellt. Hier ist wiederum die Intensität I Über der Wellenlänge λ aufgetragen. Der erste Peak A stellt eine die Temperatur der Anordnung kennzeichnende Größe dar und ist lediglich von der Temperatur der Anordnung abhängig. Ein zweiter Peak B₁ wird durch das Messobjekt verursacht. Daraus kann der Abstand D, des Messobjekts 14 von der optischen Anordnung 1' bestimmt werden. Bei Verschieben des Messobjekts 14 verschiebt sich dieser Peak, was beispielhaft gestrichelt eingezeichnet ist. In Abstand D₂ Ist das verschobene Messobjekt 14 gestrichelt eingezeichnet, wodurch ein verschobener Peak B₂ erzeugt wird. Aus der aus Peak A gewonnenen Temperatur kann wiederum über die Auswerteeinheit 13 eine Korrektur des Messwertes der optischen Anordnung bestimmt werden.

Die optischen Eigenschaften von Gradientindex-Linsen verändern sich nicht lediglich bei Temperaturänderungen, sondern sind auch Alterungseffekten unterworfen. Auch diese Änderungen lassen sich über die Messobjekt-unabhängige Reflexion bestimmen und in der Signalverarbeitung in der Auswerteelektronik 13 herausrechnen. Damit kann auch das allgemeine Langzeitdriftverhalten der optischen Anordnung, das durch weitere Faktoren beeinflusst wird, beobachtet und kompensiert werden.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: optische Anordnung
- 2: Gradientindex-Linse
- 3: Lichtwellenleiter
- 4: Lichtwellenleiter
- 5: Mehrtarbenlichtstrahl
- 6: Weißlichtquelle
- 7: Vorsatzlinse
- 8: Halterung
- 9: Grenzfläche
- 10: semipermeabler Spiegel
- 11: Lichtwellenleiter
- 12: Detektionseinrichtung
- 13: Auswerteelektronik
- 14: Messobjekt
- 15: Oberfläche des Messobjekts

## Patentansprüche

1. Verfahren zur Kompensation von temperaturbedingten Messfehlern einer optischen Anordnung (1, 1'), die mindestens eine Linse (2) aufweist, wobei die Anordnung (1, 1') ein konfokal chromatisch messender Abstandssensor ist,
wobei die optische Anordnung (1, 1') von einem Mehrfarbenlichtstrahl (5) passiert wird, der infolge von chromatischer Abberation der Linse (2) in unterschiedlich weit von der Linse (2) entfernt liegende Punkte fokussiert wird, **dadurch gekennzeichnet, dass** ein Teil des Spektrums des Lichtstrahls (5) innerhalb der optischen Anordnung (1, 1') an einer in dem spektral aufgetrennten Bereich des Mehrfarbenlichtstrahls (5) angeordneten Grenzfläche (9, 9') zumindest teilweise reflektiert und einer Detektionseinrichtung (12) zugeleitet wird, durch die eine Bestimmung eines Spektrums durchgeführt wird,
dass aus dem durch die Detektionseinrichtung (12) bestimmten Spektrum auf die Temperatur der Anordnung (1, 1') geschlossen wird und
dass mittels der derart bestimmten Temperatur eine Kompensation von temperaturbedingten Messfehlern durchgeführt wird.

2. Verfahren nach Anspruch 1, **dadurch gekennzeichnet, dass** für eine Zuordnung eines durch die Detektionseinrichtung (12) bestimmten Spektrums zu einer Temperatur der Anordnung (1, 1') eine Wertetabelle oder ein funktionaler Zusammenhang genutzt wird.

3. Verfahren nach Anspruch 1 oder 2, **dadurch gekennzeichnet, dass** zur Kompensation der Messfehler eine Addition eines Korrekturgliedes zu einer mittels der optischen Anordnung (1, 1') bestimmten Messgröße durchgeführt wird.

4. Verfahren nach Anspruch 2 oder 3, **dadurch gekennzeichnet, dass** zur Bestimmung der Wertetabelle, des funktionalen Zusammenhangs und/oder des Korrekturgliedes Kalibrierungsmessungen durchgeführt werden.

5. Verfahren nach einem der Ansprüche 1 bis 4, **dadurch gekennzeichnet, dass** zusätzlich zu den temperaturbedingten Messfehlern die Fehler kompensiert werden, die durch Alterungseffekte von Teilen der optischen Anordnung oder sonstiger Drift hervorgerufen werden.

6. Optische Anordnung, wobei die Anordnung (1, 1') mindestens eine Linse (2) aufweist, wobei die Anordnung (1, 1') ein konfokal chromatisch messender Abstandssensor ist,
wobei die Linse (2) infolge von chromatischer Abberation einen in die Anordnung (1, 1') eingekoppelten Mehrfarbenlichtstrahl (5) auf unterschiedlich weit von der Linse (2) entfernt liegenden Punkte fokussiert,
**dadurch gekennzeichnet, dass** innerhalb der optischen Anordnung (1, 1') ein optische Mittel derart angeordnet ist, dass an einer in dem spektral aufgetrennten Bereich des Mehrfarbenlichtstrahls (5) angeordneten Grenzfläche (9, 9') des optischen Mittels ein Teil des Spektrums des Mehrfarbenlichtstrahls (5) zumindest teilweise reflektiert wird, wobei der reflektierte Teil des Spektrums einer Detektionseinrichtung (12) zur Bestimmung des Spektrums zugeleitet wird, und
dass eine Auswerteelektronik (13) mit der Detektionseinrichtung (12) verbunden ist, die aus dem durch die Detektionseinrichtung (12) bestimmten Spektrum die Temperatur der Anordnung (1, 1') bestimmt und eine Kompensation von temperaturbedingten Messfehlern durchführt.

7. Anordnung nach Anspruch 6, **dadurch gekennzeichnet, dass** die Linse (2) eine Gradientindex-Linse umfasst.

8. Anordnung nach einem der Ansprüche 6 oder 7, **dadurch gekennzeichnet, dass** der Mehrfarbenlichtstrahl (5) ein Weißlichtstrahl ist.

9. Anordnung nach einem der Ansprüche 6 bis 8, **dadurch gekennzeichnet, dass** das optische Mittel durch eine nach der Linse (2) angeordneten Vorsatzlinse (7) oder die Linse (2) selbst gebildet ist.

10. Anordnung nach einem der Ansprüche 6 bis 9, **dadurch gekennzeichnet, dass** zur Erhöhung der Reflektion die Grenzfläche (9, 9') des optischen Mittels beschichtet ist.

11. Anordnung nach einem der Ansprüche 6 bis 10, **dadurch gekennzeichnet, dass** der Messbereich der Anordnung (1, 1') derart festgelegt ist, dass ein Teil des Messbereichs innerhalb der Anordnung (1, 1') liegt.

12. Anordnung nach einem der Ansprüche 6 bis 10, **dadurch gekennzeichnet, dass** das optische Mittel in einem Zwischenfokusbereich angeordnet ist.

## Claims

1. A method for compensating for temperature-related measurement errors in an optical arrangement (1, 1') comprising at least one lens (2), wherein the arrangement (1, 1') is a confocal chromatic measuring distance sensor,
wherein a multicoloured light beam (5) is passed through the optical arrangement (1, 1') and is focussed at points at varying distances from the lens (2) as a result of the chromatic aberration of the lens (2), **characterised**
**in that** a part of the spectrum of the light beam (5) is at least partly reflected within the optical arrangement (1, 1') at a boundary surface (9, 9') disposed in the spectrally fanned-out region of the multicoloured light beam (5) and is directed to a detector device (12), by means of which a determination of a spectrum is carried out, in that the temperature of the arrangement (1, 1') is determined from the spectrum determined by the detection device (12) and
**in that** a compensation for temperature-related measurement errors is carried out based on the temperature so determined.

2. A method according to claim 1, **characterised in that** a table of values or a functional correlation is used to assign a spectrum determined by the detection device (12) to a temperature of the arrangement (1, 1').

3. A method according to claim 1 or 2, **characterised in that** to compensate for the measurement errors a correction factor is added to a measured value determined by means of the optical arrangement (1, 1').

4. A method according to claim 2 or 3, **characterised in that** calibration measurements are carried out to determine the table of values, the functional correlation and/or the correction factor.

5. A method according to any one of claims 1 to 4, **characterised in that** in addition to the temperature-related measurement errors, the errors caused by ageing effects of parts of the optical arrangement or other drift are compensated.

6. An optical arrangement, wherein the arrangement (1, 1') comprises at least one lens (2), wherein the arrangement (1, 1') is a confocal chromatic measuring distance sensor,
wherein a multicoloured light beam (5) coupled into the arrangement (1, 1') is focussed by the lens (2) at points at varying distances from the lens (2) as a result of chromatic aberration,
**characterised in that** within the optical arrangement (1, 1') an optical means is arranged in such a way that a part of the spectrum of the multicoloured light beam (5) is at least partially reflected at a boundary surface (9, 9') of the optical means arranged in the spectrally fanned-out region of the multicoloured light beam (5), wherein the reflected part of the spectrum is directed to a detection device (12) in order to determine the spectrum, and
**in that** evaluating electronics (13) that determine the temperature of the arrangement (1, 1') from the spectrum determined by the detection device (12) and carry out a compensation of temperature-related measurement errors are connected to the detection device (12).

7. An arrangement according to claim 6, **characterised in that** the lens (2) is a gradient index lens.

8. A method according to any one of claims 6 or 7, **characterised in that** the multicoloured light beam (5) is a white light beam.

9. A method according to any one of claims 6 to 8, **characterised in that** the optical means is formed by an ancillary lens (7) arranged downstream of the lens (2) or by the lens (2) itself.

10. A method according to any one of claims 6 to 9, **characterised in that** the boundary surface (9, 9') of the optical means is coated in order to increase the reflection.

11. A method according to any one of claims 6 to 10, **characterised in that** the measuring range of the arrangement (1, 1') is determined such that a part of the measuring range lies within the arrangement (1, 1').

12. A method according to any one of claims 6 to 10, **characterised in that** the optical means is arranged in an intermediate focal range.

## Revendications

1. Procédé de compensation d'erreurs de mesure, dues à la température, d'un système optique (1, 1') qui comporte au moins une lentille (2), le système (1, 1') étant un capteur de distance à mesure chromatique confocale,
le système optique (1, 1') étant traversé par un faisceau lumineux polychrome (5) qui est focalisé en des points se trouvant à des distances différentes de la lentille (2) à la suite de l'aberration chromatique de la lentille (2),
**caractérisé en ce qu'**une partie du spectre du faisceau lumineux (5) est réfléchie au moins partiellement à l'intérieur du système optique (1, 1'), sur une interface (9, 9') agencée dans la zone à subdivision spectrale du faisceau lumineux polychrome (5) et conduite à un dispositif de détection (12) permettant d'effectuer la détermination d'un spectre,
**en ce qu'**on détermine la température du système (1, 1') à partir du spectre déterminé par le dispositif de détection (12) et
**en ce qu'**on effectue une compensation d'erreurs de mesure dues à la température au moyen de la température ainsi définie.

2. Procédé selon la revendication 1, **caractérisé en ce qu'**on utilise un tableau de valeurs ou un lien fonctionnel pour l'attribution d'un spectre déterminé par le dispositif de détection (12) à une température du système (1, 1').

3. Procédé selon la revendication 1 ou 2, **caractérisé en ce que**, pour la compensation des erreurs de mesure, on additionne un élément de correction et une grandeur de mesure déterminée au moyen du système optique (1, 1').

4. Procédé selon la revendication 2 ou 3, **caractérisé en ce qu'**on effectue des mesures d'étalonnage pour la détermination du tableau de valeurs, du lien fonctionnel et/ou de l'élément de correction.

5. Procédé selon l'une quelconque des revendications 1 à 4, **caractérisé en ce qu'**il y a compensation des erreurs qui sont produites par les effets de vieillissement de pièces du système optique ou d'une dérive quelconque en plus des erreurs de mesure dues à la température.

6. Système optique dans lequel le système (1, 1') comprend au moins une lentille (2), le système (1, 1') étant un capteur de distance à mesure confocale chromatique,
la lentille (2) focalisant un faisceau lumineux polychrome (5), couplé dans le système (1, 1'), en des points se trouvant à des distances différentes de la lentille (2) à la suite de l'aberration chromatique,
**caractérisé en ce qu'**on a disposé un moyen optique à l'intérieur du système optique (1, 1') de sorte qu'une partie du spectre du faisceau lumineux polychrome (5) est réfléchie au moins partiellement sur une interface (9, 9') du moyen optique, disposée dans la zone à subdivision spectrale du faisceau lumineux polychrome (5), la partie réfléchie du spectre étant conduite à un dispositif de détection (12) pour la détermination du spectre,
**en ce qu'**un matériel électronique d'analyse (13) est relié au dispositif de détection (12) qui détermine la température du système (1, 1') à partir du spectre déterminé par le dispositif de détection (12) et effectue une compensation des erreurs de mesure dues à la température.

7. Système selon la revendication 6, **caractérisé en ce que** la lentille (2) comprend une lentille à indice de gradient.

8. Système selon l'une quelconque des revendications 6 ou 7, **caractérisé en ce que** le faisceau lumineux polychrome (5) est un faisceau lumineux blanc.

9. Système selon l'une quelconque des revendications 6 à 8, **caractérisé en ce que** le moyen optique est formé d'une lentille auxiliaire (7) disposée après la lentille (2) ou de la lentille (2) même.

10. Système selon l'une quelconque des revendications 6 à 9, **caractérisé en ce que** l'interface (9, 9') du moyen optique est enduite pour augmenter la déflexion.

11. Système selon l'une quelconque des revendications 6 à 10, **caractérisé en ce que** la zone de mesure du système (1, 1') est définie de telle sorte qu'une partie de la zone de mesure se trouve à l'intérieur du système (1, 1').

12. Système selon l'une quelconque des revendications 6 à 10, **caractérisé en ce que** le moyen optique est disposé dans une zone focale intermédiaire.
